# EUROPÄISCHE PATENTANMELDUNG

(11) **EP 4 825 760 A1**
(43) Veröffentlichungstag der Anmeldung: **21.10.2026**
(21) Anmeldenummer: 26165338.0
(22) Anmeldetag: 17.03.2026
(51) Int. Cl.: B65G 21/22, B65G 17/00

(54) **FÖRDERVORRICHTUNG MIT STAUROLLENKETTE, WELCHE IN EINEM GRUNDKÖRPER LÄUFT, DER VON EINEM HILFSKÖRPER VERSCHLOSSEN IST**

(30) Priorität: 14.04.2025 DE 102025114565
(71) Anmelder: Robert Bosch GmbH, 70442 Stuttgart (DE)
(72) Erfinder: Kiebel, Markus, 70499 Stuttgart (DE)

(57) **Zusammenfassung**

Die Erfindung betrifft eine Fördervorrichtung (10) mit wenigstens einem einstückigen Grundkörper (20), dem jeweils eine endlose Staurollenkette (30) zugeordnet ist, wobei die Staurollenkette (30) eine erste, eine zweite und eine dritte Rollenreihe (31, 32, 33) bildet, wobei die erste Rollenreihe (31) an einer zugeordneten ersten Gleitleiste (41) abgestützt ist, wobei die dritte Rollenreihe (33) an einer zugeordneten zweiten Gleitleiste (42) abgestützt ist, wobei die genannte Querschnittsform eines Grundkörpers (20) jeweils einen L-förmigen ersten Schenkel (25) bildet, welcher die jeweils zugeordnete erste Rollenreihe (31) überdeckt, wobei ein freies Ende (26) des ersten Schenkels (25) der zweiten Rollenreihe (32) in Querrichtung (12) mit Abstand gegenübersteht.

Erfindungsgemäß ist dem wenigstens einen Grundkörper (20) jeweils ein gesonderter Hilfskörper (50) zugeordnet, welcher sich mit einer konstanten Querschnittsform entlang der Förderrichtung (11) erstreckt, wobei der Hilfskörper (50) am betreffenden Grundkörper (20) befestigt ist, wobei der Hilfskörper (50) einen L-förmigen zweiten Schenkel (60) bildet, welcher die dritte Rollenreihe (33) überdeckt, wobei ein freies Ende (61) des zweiten Schenkels (60) der zweiten Rollenreihe (32) in Querrichtung (12) mit Abstand gegenübersteht, wobei die zweite Rollenreihe (32) in Hochrichtung (13) über den zweiten Schenkel (60) übersteht.

## Beschreibung

Die Erfindung betrifft eine Fördervorrichtung gemäß dem Oberbegriff von Anspruch 1.

Aus der EP 3 896 011 B1 ist eine Fördervorrichtung mit einer Staurollenkette bekannt. Die Staurollenkette läuft in einem einstückigen Grundkörper, der aus Aluminium im Strangpressverfahren hergestellt ist. Der Grundkörper hat einen ersten und einen zweiten Schenkel, der jeweils L-förmig ausgebildet ist, wobei er eine jeweils zugeordnete erste oder dritte Rollenreihe der Staurollenkette überdeckt. Das Fördergut wird von einer zweiten Rollenreihe getragen, welche in Hochrichtung über den ersten und den zweiten Schenkel übersteht. An dem Grundkörper ist eine gesonderte erste Gleitleiste befestigt, auf welcher die erste Rollenreihe läuft, wobei an dem Grundkörper eine gesonderte zweite Gleitleiste befestigt ist, auf welcher die dritte Rollenreihe läuft.

Mit der vorliegenden Erfindung soll eine Fördervorrichtung geschaffen werden, die für besonders schweres Fördergut geeignet ist. Insbesondere sollen Streckenlasten von bis zu 3 kg pro cm Förderstrecke ermöglicht werden. Hierfür reichen die bekannten Gleitleisten aus Kunststoff nicht mehr aus. Es werden daher vorzugsweise Gleitleisten aus Stahl verwendet, die eine deutlich höhere Tragfähigkeit haben. Diese Gleitleisten sind jedoch kaum noch biegeelastisch. Sie können daher nicht mehr durch den schmalen Spalt im bekannten Grundkörper montiert werden, durch den die zweite Rollenreihe aus dem Grundkörper herausragt. Insbesondere diesem Problem soll mit der vorliegenden Erfindung abgeholfen werden.

Gemäß Anspruch 1 wird vorgeschlagen, dass dem wenigstens einen Grundkörper jeweils ein gesonderter Hilfskörper zugeordnet ist, welcher sich mit einer konstanten Querschnittsform entlang der Förderrichtung erstreckt, wobei der Hilfskörper am betreffenden Grundkörper befestigt ist, wobei der Hilfskörper einen L-förmigen zweiten Schenkel bildet, welcher die dritte Rollenreihe überdeckt, wobei ein freies Ende des zweiten Schenkels der zweiten Rollenreihe in Querrichtung mit Abstand gegenübersteht, wobei die zweite Rollenreihe in Hochrichtung über den zweiten Schenkel übersteht. Die erste und die zweite Gleitleiste werden vorzugsweise montiert, bevor der Hilfskörper am Grundkörper befestigt wird. Damit ist der Montageort der ersten und der zweiten Gleitleiste gut zugänglich. Der Grundkörper und/oder der Hilfskörper bestehen vorzugsweise aus Aluminium, wobei sie höchst vorzugsweise im Strangpressverfahren hergestellt sind. Die erste und/oder die zweite Gleitleiste sind vorzugsweise in den Grundkörper eingepresst.

In den abhängigen Ansprüchen sind vorteilhafte Weiterbildungen und Verbesserungen der Erfindung angegeben.

Es kann vorgesehen sein, dass die erste und/oder die zweite Gleitleiste jeweils aus einem nichtrostenden Stahl besteht. Derartige Gleitleisten können sehr hohe Lasten tragen, so dass die Fördervorrichtung besonders schweres Fördergut fördern kann. Aufgrund ihrer geringen Elastizität sind sie aber nur schwer im bekannten einstückigen Grundkörper montierbar. Der nichtrostende Stahl hat vorzugsweise eine austenitische Gefügestruktur, wobei es sich höchst vorzugsweise um den Werkstoff X5CrNi18-10 (entspricht Werkstoffnummer 1.4301) handelt.

Es kann vorgesehen sein, dass der Hilfskörper einen plattenartigen Befestigungsabschnitt umfasst, der parallel zur Hochrichtung ausgerichtet ist, wobei ein dem Grundkörper zugewandtes freies Stützende des Befestigungsabschnitts in Hochrichtung am Grundkörper anliegt, wobei mehrere gesonderte Greifkörper vorgesehen sind, die entlang der Förderrichtung verteilt außen am Grundkörper befestigt sind, wobei die Greifkörper jeweils einen hakenartigen Greifabschnitt haben, welcher ein Greifende des Befestigungsabschnitts hintergreift, wobei das Greifende dem Stützende in Hochrichtung gegenüberliegt. Der entsprechende Hilfskörper benötigt besonders wenig Material und ist damit kostengünstig herstellbar. Er ist dennoch stabil am Grundkörper befestigt. Die Greifkörper sind vorzugsweise untereinander gleich ausgeführt. Sie haben vorzugsweise in Förderrichtung eine konstante Breite. Ihre Länge in Hochrichtung ist vorzugsweise größer, vorzugsweise wenigstens 5-mal größer, als die genannte Breite.

Es kann vorgesehen sein, dass der Befestigungsabschnitt an einer ebenen Stützfläche des betreffenden Grundkörpers anliegt, wobei die Stützfläche senkrecht zur Querrichtung ausgerichtet ist. Der Befestigungsabschnitt ist somit zwischen der Stützfläche und den Greifkörpern angeordnet, so dass er gegen Verlagerung in Querrichtung gesichert ist.

Es kann vorgesehen sein, dass das Stützende im Bereich der Stützfläche eine Ecke bildet, welche einen Winkel von weniger als 80° einschließt. Diese Ecke bewirkt, dass der Befestigungsabschnitt allein durch eine in Hochrichtung wirkende Kraft, welche vom Greifkörper ausgeübt wird, gegen die Stützfläche gedrückt wird. Der Hilfskörper ist in der Folge spielfrei am Grundkörper befestigt. Die entsprechende Ecke wird vorzugsweise von zwei ebenen Flächen des Hilfskörpers definiert, welche parallel zur Förderrichtung ausgerichtet sind.

Es kann vorgesehen sein, dass der Greifkörper eine Klemmfläche hat, welche sowohl am Grundkörper als auch am Befestigungsabschnitt anliegt, wobei das Greifende im Bereich der Klemmfläche eine Ecke bildet, welche einen Winkel von weniger als 80° einschließt. Diese Ecke bewirkt, dass der Befestigungsabschnitt allein durch eine in Hochrichtung wirkende Kraft, welche vom Greifkörper ausgeübt wird, gegen die Klemmfläche gedrückt wird. Der Eingriff zwischen Greifkörper und Hilfskörper ist in der Folge spielfrei. Die Klemmfläche liegt vorzugsweise unmittelbar am Grundkörper und/oder am Befestigungsabschnitt an. Die Klemmfläche ist vorzugsweise eben ausgebildet, wobei höchst vorzugsweise die entsprechenden Gegenflächen am Grundkörper und am Hilfskörper ebenfalls eben ausgebildet sind. Der Greifabschnitt des Greifkörpers ist vorzugsweise an die genannte Ecke angepasst. Die entsprechende Ecke wird vorzugsweise von zwei ebenen Flächen des Hilfskörpers definiert, welche parallel zur Förderrichtung ausgerichtet sind.

Es kann vorgesehen sein, dass der Grundkörper wenigstens eine hinterschnittene Nut umfasst, wobei die Greifkörper mit einer jeweils zugeordneten hinterschnittenen Nut verschraubt sind. Diese Befestigung der Greifkörper ist sehr stabil und dennoch kostengünstig. Vorzugsweise geschieht die genannte Verschraubung mit einem Nutenstein, einer Hammermutter oder einer Hammerschraube, welche jeweils in die hinterschnittene Nut eingreift. Die hinterschnittene Nut ist im Querschnitt betrachtet vorzugsweise T-förmig ausgebildet.

Es kann vorgesehen sein, dass an wenigstens einem Hilfskörper eine gesonderte dritte Gleitleiste befestigt ist, die eine Seitenführung für das Fördergut bildet. Die Seitenführung ist also gerade nicht am Grundkörper angeordnet. Der vergleichsweise große und damit in der Herstellung teure Grundkörper kann folglich auch in der Quermitte der Fördervorrichtung Verwendung finden, also an einer Stelle, an der keine Seitenführung benötigt wird, wobei die entsprechende Geometrie die Bewegung des Förderguts sogar stören würde. Die dritte gleitleiste besteht vorzugsweise aus Stahl, höchst vorzugsweist aus nichtrostendem Stahl und insbesondere aus dem gleichen Werkstoff wie die erste und die zweite Gleitleiste. Es ist denkbar, dass die dritte Gleitleiste aus Kunststoff besteht.

Es kann vorgesehen sein, dass die dritte Gleitleiste im Querschnitt betrachtet U-förmig ausgebildet ist, wobei sie einen in Hochrichtung weisenden Haltefortsatz am Hilfskörper umgreift. Eine derartige Seitenführung ist besonders stabil, so dass sie mit sehr schwerem Fördergut verwendbar ist.

Es kann vorgesehen sein, dass die erste und/oder die zweite Gleitleiste im Querschnitt betrachtet jeweils L-förmig ausgebildet ist/sind. Diese Querschnittsform ist bei einer Gleitleiste aus Stahl einfacher herstellbar als die bekannte T-Form von Kunststoff-Gleitleisten. Sie kann dennoch in vergleichbarer Weise in den Grundkörper eingepresst werden.

Es kann vorgesehen sein, dass der wenigstens eine Grundkörper einen ersten und einen zweiten Grundkörper umfasst, welche bezüglich einer Ebene, die senkrecht zur Querrichtung ausgerichtet ist, spiegelsymmetrisch zueinander ausgebildet sind, so dass die betreffenden zweiten Rollenreihen eine Förderebene definieren, die senkrecht zur Hochrichtung ausgerichtet ist. Da sich der Grundkörper mit einer konstanten Querschnittsform in Förderrichtung erstreckt, kann die genannte Spiegelsymmetrie durch Wenden des Grundkörpers um 180° herbeigeführt werden, wobei die entsprechende Wendeachse parallel zur Hochrichtung ausgerichtet ist. Der erste und der zweite Grundkörper können damit mit demselben Strangpresswerkzeug hergestellt werden. Für die betreffenden Hilfskörper verhält es sich analog.

Es kann vorgesehen sein, dass die Hilfskörper des ersten und des zweiten Grundkörpers bezüglich der Querrichtung jeweils an einer vom anderen, zweiten oder ersten, Grundkörper wegweisenden Seite des betreffenden ersten oder zweiten Grundkörpers angeordnet sind, wobei an den genannten Hilfskörpern jeweils eine gesonderte dritte Gleitleiste aus Kunststoff befestigt ist, die eine Seitenführung für das Fördergut bildet. Damit ist das Fördergut in Querrichtung an beiden gegenüberliegenden Seiten geführt.

Es kann vorgesehen sein, dass der wenigstens eine Grundkörper wenigstens einen dritten Grundkörper umfasst, der in Querrichtung zwischen dem ersten und dem zweiten Grundkörper angeordnet ist, wobei die betreffende zweite Rollenreihe in Hochrichtung über den betreffenden Hilfskörper übersteht. Mit einer derartigen Fördervorrichtung kann besonders schweres Fördergut transportiert werden. Dem Hilfskörper des dritten Grundkörpers ist insbesondere keine dritte Gleitleiste und kein entsprechender Haltefortsatz zugeordnet. Vorzugsweise berührt die zweite Rollenreihe des dritten Grundkörpers die Förderebene tangential.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Ansicht eines Teils einer erfindungsgemäßen Fördervorrichtung; und
- Fig. 2: einen Querschnitt der ersten bzw. des zweiten Grundkörpers der Fördervorrichtung nach Fig. 1.

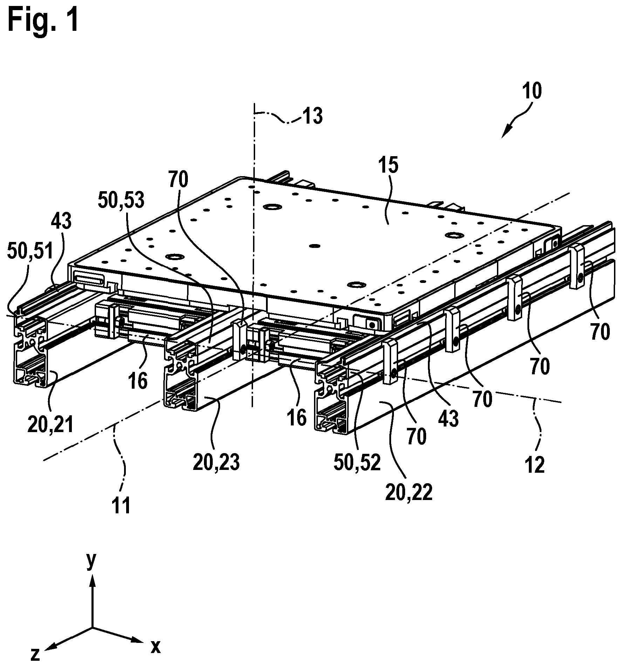

Figur 1 zeigt eine perspektivische Ansicht eines Teils einer erfindungsgemäßen Fördervorrichtung 10. Die Fördervorrichtung 10 umfasst vorliegend drei Grundkörper 20, nämlich einen ersten Grundkörper 21, einen zweiten Grundkörper 22 und einen dritten Grundkörper 23. Alle Grundkörper 20 erstrecken sich mit der gleichen Querschnittsform entlang der Förderrichtung 11. Hierbei ist anzumerken, dass der erste Grundkörper 21 um 180° bezüglich einer Wendeachse gewendet relativ zum zweiten Grundkörper 22 eingebaut ist, so dass der erste Grundkörper 21 und der zweite Grundkörper 22 effektiv eine spiegelsymmetrische Querschnittsform haben. Die genannte Wendeachse ist parallel zur Hochrichtung 13 ausgerichtet. Eine Querrichtung 12 ist senkrecht zur Förderrichtung 11 ausgerichtet, wobei die Hochrichtung 13 senkrecht zur Förderrichtung 11 und zur Querrichtung 12 ausgerichtet ist.

Die identische Querschnittsform der Grundkörper 20 ist dem Umstand geschuldet, dass alle Grundkörper 20 aus Aluminium im Strangpressverfahren hergestellt sind, wobei für alle Grundkörper 20 dasselbe Strangpresswerkzeug verwendet wird.

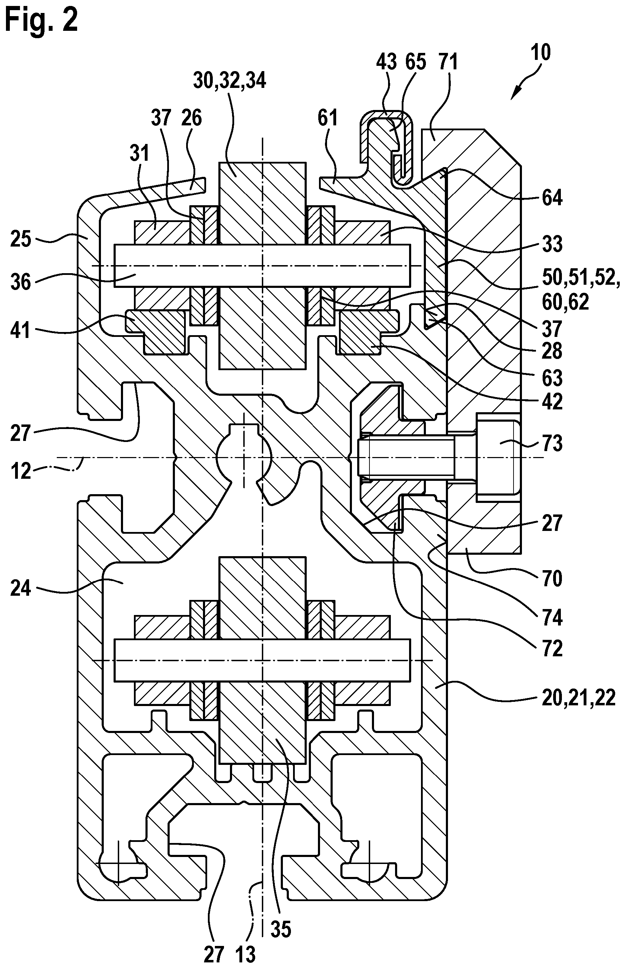

Die verschiedenen Grundkörper 20 sind vorliegend über Verbindungsstreben 16 fest miteinander verbunden. Die Verbindungsstreben 16 sind jeweils in Form eines T-Nuten-Profils aus Aluminium ausgebildet, wobei sie sich parallel zur Querrichtung 12 erstrecken. Sie sind an beiden gegenüberliegenden Stirnseiten mit einer jeweils zugeordneten hinterschnittenen Nut (Nr. 27 in Fig. 2) am betreffenden Grundkörper 20 verschraubt.

In jedem Grundkörper 20 ist eine Staurollenkette (Nr. 30 in Fig. 2) abschnittsweise aufgenommen, die in Figur 1 nicht gezeigt ist. Die Staurollenkette läuft in der Fördervorrichtung 10 endlos um, so dass sich ein vorlaufendes Trum (Nr. 34 in Fig. 2) und ein rücklaufendes Trum (Nr. 35 in Fig. 2) ergibt. In Figur 1 ist nur der Teil der Fördervorrichtung 10 dargestellt, in welchem die Staurollenkette parallel zur Förderrichtung 11 verläuft. Eine im Rahmen der vorliegenden Erfindung verwendbare Umlenkung für eine Staurollenkette ist beispielsweise in EP 1 188 694 B1 gezeigt.

Das vorlaufende Trum der Staurollenkette trägt das Fördergut 15, welches vorliegend von einem plattenartigen Werkstückträger gebildet wird. Der vorliegende Werkstückträger hat einen rechteckigen, vorzugsweise einen quadratischen, Umriss. Dabei liegen die zweiten Rollenreihen (Nr. 32 in Fig. 2) der vorliegend drei Staurollenketten am Fördergut 15 an. Es versteht sich, dass noch mehr Staurollenketten zur Abstützung eines besonders schweren Förderguts 15 verwendbar sind. Die entsprechenden Rollen berühren vorzugsweise eine gemeinsame Förderebene tangential, wobei die Förderebene senkrecht zur Hochrichtung 13 ausgerichtet ist. Der plattenartige Werkstückträger ist dementsprechend ebenfalls senkrecht zur Hochrichtung 13 ausgerichtet.

Hinzuweisen ist noch auf die beiden in Querrichtung 12 gegenüberliegenden Seitenführungen für das Fördergut 15. Diese werden jeweils von einer dritten Gleitleiste 43 gebildet, welche an einem ersten Hilfskörper 51 oder einem zweiten Hilfskörper 52 befestigt ist. Der erste Hilfskörper 51 ist wiederum am ersten Grundkörper 21 befestigt, wobei der zweite Hilfskörper 52 am zweiten Grundkörper 22 befestigt ist. In beiden Fällen kommen hierfür mehrere Greifkörper 70 zum Einsatz, die verteilt entlang der Förderrichtung 11 angeordnet sind.

Dem mittleren, dritten Grundkörper 23 ist ist ein dritter Hilfskörper 53 zugeordnet, der in analoger Weise am dritten Grundkörper 23 befestigt ist. Beim dritten Hilfskörper 53 wurde jedoch auf die dritte Gleitleiste 43 und den zugeordneten Haltefortsatz (Nr. 65 in Fig. 2) verzichtet. Ein Vorteil der Erfindung besteht darin, dass bei einer dreispurigen Fördervorrichtung 10 für alle drei Spuren der gleiche Grundkörper 20 verwendet werden kann, wobei nur für die mittlere dritte Spur ein anderer Hilfskörper 53 notwendig ist, als für die beiden äußeren Spuren. Der dritte Grundkörper 23 kann in der gezeigt Stellung oder um 180° um die genannte Wendeachse gewendet eingebaut werden.

Figur 2 zeigt einen Querschnitt des ersten Grundkörpers 21 bzw. des zweiten Grundkörpers 22 der Fördervorrichtung 10 nach Figur 1. Die Schnittebene ist senkrecht zur Förderrichtung ausgerichtet. In Figur 1 ist zunächst die bereits angesprochene Staurollenkette 30 mit ihrem vorlaufenden Trum 34 und ihrem rücklaufenden Trum 35 zu erkennen. Die Staurollenkette 30 umfasst eine erste Rollenreihe 31, eine zweite Rollenreihe 32 und eine dritte Rollenreihe 33, welche in Querrichtung 12 in der angegebenen Reihenfolge nebeneinander angeordnet sind. Die entsprechenden Rollen werden von Bolzen 36 getragen, die sich in Querrichtung 12 erstrecken. In Förderrichtung benachbarte Bolzen 36 sind über Laschen 37 miteinander verbunden, und zwar gelenkig. Eine Lasche 37 ist dabei zwischen der ersten Rollenreihe 31 und der zweiten Rollenreihe 32 angeordnet, wobei eine weitere Lasche 37 zwischen der zweiten Rollenreihe 32 und der dritten Rollenreihe 33 angeordnet ist. Die Staurollenkette 30 kann beispielsweise gemäß der DE 10 2018 116 672 A1 ausgeführt sein.

Die Rollen der ersten Rollenreihe 31 und der dritten Rollenreihe 33 haben jeweils den gleichen Durchmesser, wobei dieser kleiner als der Durchmesser der Rollen der zweiten Rollenreihe 32 ausgebildet ist. Die erste Rollenreihe 31 läuft auf einer gesonderten ersten Gleitleiste 41, wobei die dritte Rollenreihe 33 auf einer gesonderten zweiten Gleitleiste 42 läuft. Das Fördergut ist wiederum an der zweiten Rollenreihe 32 abgestützt. Damit ist das Gewicht des Förderguts über die Staurollenkette 30 an der ersten Gleitleiste 41 und der zweiten Gleitleiste 42 abgestützt.

Die erfindungsgemäße Fördervorrichtung 10 ist für besonders schweres Fördergut vorgesehen, welches beispielsweise eine Streckenlast von bis 3 kg pro cm Förderstrecke haben kann. Als Fördergut kommen hierbei insbesondere Batteriemodule für ein elektrisch angetriebenes Fahrzeug in Betracht. Wegen der hohen Streckenlast bestehen die erste Gleitleiste 41 und die zweite Gleitleiste 42 vorzugsweise aus Stahl, höchst vorzugsweise aus nichtrostendem Stahl, insbesondere aus dem Stahl X5CrNi18-10 (entspricht Werkstoffnummer 1.4301). Sie haben vorzugsweise eine L-förmige Querschnittsform, wobei ein horizontaler Schenkel die zugeordnete erste Rollenreihe 31 oder dritte Rollenreihe 33 trägt, wobei der andere, vertikale Schenkel in eine angepasste Ausnehmung im Grundkörper 20 eingepresst ist. Der horizontale Schenkel ist dabei in Hochrichtung 13 unmittelbar am Grundkörper 20 abgestützt. Derartige Gleitleisten 41, 42 haben eine sehr hohe Steifigkeit. Die Montage von Gleitleisten 41, 42 an einem Grundkörper 20, der einstückig zwei Schenkel 25, 60 zur Abdeckung der ersten Rollenreihe 31 und dritten Rollenreihe 33 umfasst (siehe EP 3 896 011 B1) setzt jedoch voraus, dass die Gleitleisten 41, 42 bei der Montage nennenswert verbogen werden. Dies ist bei Gleitleisten aus Kunststoff ohne Weiteres möglich, nicht jedoch bei den bevorzugten sehr steifen Gleitleisten 41, 42 aus Stahl. Im Rahmen der vorliegenden Anmeldung soll vertikal als gleichbedeutend mit in Hochrichtung 13 verlaufend verstanden werden, wobei horizontal gleichbedeutend mit in Querrichtung 12 verlaufend verstanden werden soll.

Der Grundkörper 20 erstreckt sich mit der in Figur 2 gezeigten, konstanten Querschnittsform entlang der Förderrichtung. Die Querschnittsform bildet an ihrer Außenseite vorliegend drei hinterschnittene Nuten 27, die im Querschnitt betrachtet jeweils T-förmig ausgebildet sind, so dass sie eine Hammermutter 72, einen Nutenstein oder eine Hammerschraube aufnehmen können. Die Querschnittsform des Grundkörpers 20 umschließt einen Hohlraum 24 endlos, in welchem das rücklaufende Trum 35 der Staurollenkette 30 läuft. Dort kann keine Gleitleiste montiert werden, weshalb dort vorzugsweise die zweite Rollenreihe 32 unmittelbar auf dem Grundkörper 20 läuft, wobei die erste Rollenreihe 31 und die dritte Rollenreihe 33 mit Abstand zum Grundkörper 20 angeordnet sind. Die zweite Rollenreihe 32 des rücklaufenden Trums 35 läuft vorliegend auf zwei sich in Hochrichtung 13 erstreckenden Fortsätzen am Grundkörper 20. Hierdurch kann sich überschüssiges Öl in den Zwischenräumen, welche benachbart zu den genannten Fortsätzen angeordnet sind, sammeln. Eine Verschleppung von überschüssigem Öl durch die Staurollenkette 30 wird damit vermieden.

Der einstückige Grundkörper 20 bildet weiterhin einen ersten Schenkel 25, welcher L-förmig ausgebildet ist und welcher die erste Rollenreihe 31 derart überdeckt, dass ein freies Ende 26 des ersten Schenkels 25 in Querrichtung 12 mit geringem Abstand zur zweiten Rollenreihe 32 angeordnet ist, wobei die zweite Rollenreihe 32 in Hochrichtung 13 über den ersten Schenkel 25 übersteht. Das genannte freie Ende 26 wird vom zumindest näherungsweise parallel zur Querrichtung 12 verlaufenden Abschnitt gebildet, wobei ein in Hochrichtung 13 verlaufender Abschnitt des ersten Schenkels 25 einstückig mit dem übrigen Grundkörper 20 verbunden ist. Auf der in Querrichtung 12 gegenüberliegenden Seite ist der Grundkörper 20 für sich betrachtet offen ausgebildet. Von dort her können also die erste Gleitleiste 41 und die zweite Gleitleiste 42 in den Grundkörper 20 eingelegt bzw. eingepresst werden, ohne dass diese hierfür verbogen werden müssen. Erst danach wird die Staurollenkette 30 eingebaut, wobei anschließend der Hilfskörper 50 montiert wird, welcher den zweiten Schenkel 60 bildet.

Der L-förmige zweite Schenkel 60 ist analog zum ersten Schenkel 25 ausgebildet. Sein freies Ende 61 steht der zweiten Rollenreihe 32 daher ebenfalls in Querrichtung 12 mit geringem Abstand gegenüber. Er überdeckt die dritte Rollenreihe 33. Die zweite Rollenreihe 32 steht in Hochrichtung 13 über den zweiten Schenkel 60. Der zweite Schenkel 60 wird von einem gesonderten Hilfskörper 50 gebildet, welcher vorzugsweise aus Aluminium im Strangpressverfahren hergestellt wird. Der Hilfskörper 50 erstreckt sich daher mit der in Figur 2 ersichtlichen, konstanten Querschnittsform entlang der Förderrichtung.

Der Hilfskörper 50 ist so gestaltet, dass er möglichst kostengünstig herstellbar ist, wobei insbesondere seine Querschnittsfläche minimiert ist. In der Folge ergeben sich nur wenige Ansatzpunkte für eine Befestigung des Hilfskörpers 50 am Grundkörper 20. Dennoch muss die Befestigung stabil sein, da zumindest ein Teil der Hilfskörper 50 vorzugsweise eine Seitenführung für das Fördergut bildet. Hierfür ist die U-förmige dritte Gleitleiste 43 vorgesehen, welche an einem in Hochrichtung 13 weisenden Haltefortsatz 65 des Hilfskörpers 50 aufgeschnappt ist. Die dritte Gleitleiste 43 besteht vorzugsweise aus Kunststoff. Die dritte Gleitleiste 43 und der zugeordnete Haltefortsatz 65 können beispielsweise gemäß einer der Ausführungsformen der EP 1 273 536 B1 ausgebildet sein.

Die Befestigung des Hilfskörpers 50 am Grundkörper 20 erfolgt mittels mehrerer gesonderter Greifkörper 70, die entlang der Förderrichtung 11 verteilt am Grundkörper 20 befestigt sind, und zwar an einer jeweils zugeordneten hinterschnittenen Nut 27. Vorliegend ist in die betreffende hinterschnittene Nut 27 eine Hammermutter 72 eingesetzt, in welche eine Schraube 73 eingeschraubt ist, die den Greifkörper 70 durchsetzt. Die Schraube 73 ist vorliegend als Zylinderkopfschraube ausgebildet, deren Kopf in einer Senkung des Greifkörpers 70 versenkt aufgenommen ist. Der Greifkörper 70 hat dabei eine ebene Klemmfläche 74, die unmittelbar an einer ebenen Gegenfläche am Grundkörper 20 anliegt. Die genannten ebenen Flächen sind senkrecht zur Querrichtung 12 ausgerichtet. Diese Verbindung ist sehr stabil, so dass der Greifkörper 70 die durch die Seitenführung des Förderguts 15 verursachten Kräfte problemlos auf den Grundkörper 20 übertragen kann. Ein jeder Greifkörper 70 hat in Förderrichtung vorzugsweise eine konstante Breite, wobei er sich parallel zur Hochrichtung 13 erstreckt.

Der Hilfskörper 50 bildet einen plattenartigen Befestigungsabschnitt 62, der mit seiner vorzugsweise ebenen Außenseite unmittelbar an der Klemmfläche 74 des Greifkörpers 70 anliegt. In Hochrichtung 13 betrachtet, hat der Befestigungsabschnitt 62 ein Stützende 63 und ein gegenüberliegendes Greifende 64, welche beide eine Ecke bilden. Die beiden Ecken schließen jeweils einen Winkel von weniger als 80°, insbesondere einen Winkel von 60°, ein. Die genannten Ecken sind vorzugsweise mit einem kleinen Radius verrundet ausgebildet, damit sie im Strangpressverfahren herstellbar sind. Die beiden Ecken sind diagonal gegenüberliegend am Befestigungsabschnitt 62 angeordnet. Der Befestigungsabschnitt 62 wird also am Greifende 64 durch den dortigen Hintergriff des Greifabschnitts 71 des Greifkörpers 70 gegen den Greifkörper 70 gedrückt. Am gegenüberliegenden Stützende 63 wird der Befestigungsabschnitt 62 gegen den Grundkörper 20 gedrückt. Hierbei ist anzumerken, dass der Grundkörper 20 an die Ecke am Stützende 63 angepasst ist. Er hat insbesondere eine ebene Stützfläche 28, die senkrecht zur Querrichtung 12 angeordnet ist, wobei sie seitlich innen am Befestigungsabschnitt 62 anliegt. Damit ergeben sich am Befestigungsabschnitt 62 zwei definierte Einspannstellen, die bei gegebener, minimaler Größe des Hilfskörpers 50 einen maximalen Abstand haben. Die Befestigung des Hilfskörpers 50 ist damit besonders stabil.

### Bezugszeichen

- 10: Fördervorrichtung
- 11: Förderrichtung
- 12: Querrichtung
- 13: Hochrichtung
- 15: Fördergut
- 16: Verbindungsstrebe

- 20: Grundkörper
- 21: erster Grundkörper
- 22: zweiter Grundkörper
- 23: dritte Grundkörper
- 24: Hohlraum
- 25: erster Schenkel
- 26: freies Ende des ersten Schenkels
- 27: hinterschnittene Nut
- 28: Stützfläche

- 30: Staurollenkette
- 31: erste Rollenreihe
- 32: zweite Rollenreihe
- 33: dritte Rollenreihe
- 34: vorlaufendes Trum
- 35: rücklaufendes Trum
- 36: Bolzen
- 37: Lasche

- 41: erste Gleitleiste
- 42: zweite Gleitleiste
- 43: dritte Gleitleiste
- 50: Hilfskörper
- 51: erste Hilfskörper
- 52: zweiter Hilfskörper
- 53: dritter Hilfskörper

- 60: zweiter Schenkel
- 61: freies Ende des zweiten Schenkels
- 62: Befestigungsabschnitt
- 63: Stützende
- 64: Greifende
- 65: Haltefortsatz

- 70: Greifkörper
- 71: Greifabschnitt
- 72: Hammermutter
- 73: Schraube
- 74: Klemmfläche

## Patentansprüche

1. Fördervorrichtung (10) mit wenigstens einem einstückigen Grundkörper (20), der sich jeweils mit einer konstanten Querschnittsform entlang einer Förderrichtung (11) erstreckt, wobei dem wenigstens einen Grundkörper (20) jeweils eine endlose Staurollenkette (30) mit einem vorlaufenden und einem rücklaufenden Trum (34, 35) zugeordnet ist, wobei die Staurollenkette (30) eine erste, eine zweite und eine dritte Rollenreihe (31, 32, 33) bildet, die entlang einer Querrichtung (12) in der angegebenen Reihenfolge nebeneinander angeordnet sind, wobei die Querrichtung (12) senkrecht zur Förderrichtung (11) ausgerichtet ist, wobei die Rollen der zweiten Rollenreihe (32) einen größeren Durchmesser aufweisen als die Rollen der ersten und der dritten Rollenreihe (31, 33), wobei das rücklaufende Trum (35) in einem abgeschlossenen Hohlraum (24) des betreffenden Grundkörpers (20) angeordnet ist, wobei dem wenigstens einen Grundkörper (20) jeweils eine gesonderte erste und eine gesonderte zweite Gleitleiste (41, 42) zugeordnet sind, wobei die erste und die zweite Gleitleiste (41, 42) jeweils am betreffenden Grundkörper (20) befestigt ist, wobei die erste Rollenreihe (31) an der zugeordneten ersten Gleitleiste (41) abgestützt ist, wobei die dritte Rollenreihe (33) an der zugeordneten zweiten Gleitleiste (42) abgestützt ist, wobei die genannte Querschnittsform eines Grundkörpers (20) jeweils einen L-förmigen ersten Schenkel (25) bildet, welcher die jeweils zugeordnete erste Rollenreihe (31) überdeckt, wobei ein freies Ende (26) des ersten Schenkels (25) der zweiten Rollenreihe (32) in Querrichtung (12) mit Abstand gegenübersteht, wobei die zweite Rollenreihe (32) in eine Hochrichtung (13) über den betreffenden ersten Schenkel (25) übersteht, so dass ein Fördergut (15) auf der zweiten Rollenreihe (32) abstützbar ist, wobei die Hochrichtung (13) senkrecht zur Förderrichtung (11) und zur Querrichtung (12) ausgerichtet ist,
**dadurch gekennzeichnet, dass** dem wenigstens einen Grundkörper (20) jeweils ein gesonderter Hilfskörper (50) zugeordnet ist, welcher sich mit einer konstanten Querschnittsform entlang der Förderrichtung (11) erstreckt, wobei der Hilfskörper (50) am betreffenden Grundkörper (20) befestigt ist, wobei der Hilfskörper (50) einen L-förmigen zweiten Schenkel (60) bildet, welcher die dritte Rollenreihe (33) überdeckt, wobei ein freies Ende (61) des zweiten Schenkels (60) der zweiten Rollenreihe (32) in Querrichtung (12) mit Abstand gegenübersteht, wobei die zweite Rollenreihe (32) in Hochrichtung (13) über den zweiten Schenkel (60) übersteht.

2. Fördervorrichtung (10) nach Anspruch 1,
wobei die erste (41) und/oder die zweite Gleitleiste (42) jeweils aus einem nichtrostenden Stahl besteht.

3. Fördervorrichtung (10) nach einem der vorstehenden Ansprüche,
wobei der Hilfskörper (50) einen plattenartigen Befestigungsabschnitt (62) umfasst, der parallel zur Hochrichtung (13) ausgerichtet ist, wobei ein dem Grundkörper (20) zugewandtes freies Stützende (63) des Befestigungsabschnitts (62) in Hochrichtung (13) am Grundkörper (20) anliegt, wobei mehrere gesonderte Greifkörper (70) vorgesehen sind, die entlang der Förderrichtung (11) verteilt außen am Grundkörper (20) befestigt sind, wobei die Greifkörper (70) jeweils einen hakenartigen Greifabschnitt (71) haben, welcher ein Greifende (64) des Befestigungsabschnitts (62) hintergreift, wobei das Greifende (64) dem Stützende (63) in Hochrichtung (13) gegenüber liegt.

4. Fördervorrichtung (10) nach Anspruch 3,
wobei der Befestigungsabschnitt (62) an einer ebenen Stützfläche (28) des bestreffenden Grundkörpers (20) anliegt, wobei die Stützfläche (28) senkrecht zur Querrichtung (12) ausgerichtet ist.

5. Fördervorrichtung (10) nach Anspruch 4,
wobei das Stützende (63) im Bereich der Stützfläche (28) eine Ecke bildet, welche einen Winkel von weniger als 80° einschließt.

6. Fördervorrichtung (10) nach einem der Anspruch 3 bis 5,
wobei der Greifkörper (70) eine Klemmfläche (74) hat, welche sowohl am Grundkörper (20) als auch am Befestigungsabschnitt (62) anliegt, wobei das Greifende (64) im Bereich der Klemmfläche eine Ecke bildet, welche einen Winkel von weniger als 80° einschließt.

7. Fördervorrichtung (10) nach einem der vorstehenden Ansprüche,
wobei der Grundkörper (20) wenigstens eine hinterschnittene Nut (27) umfasst, wobei die Greifkörper (70) mit einer jeweils zugeordneten hinterschnittenen Nut (27) verschraubt sind.

8. Fördervorrichtung (10) nach einem der vorstehenden Ansprüche,
wobei an wenigstens einem Hilfskörper (50) eine gesonderte dritte Gleitleiste (43) befestigt ist, die eine Seitenführung für das Fördergut (15) bildet.

9. Fördervorrichtung (10) nach Anspruch 8,
wobei die dritte Gleitleiste (43) im Querschnitt betrachtet U-förmig ausgebildet ist, wobei sie einen in Hochrichtung (13) weisenden Haltefortsatz (65) am Hilfskörper (50) umgreift.

10. Fördervorrichtung (10) nach einem der vorstehenden Ansprüche,
wobei die erste (41) und/oder die zweite Gleitleiste (42) im Querschnitt betrachtet jeweils L-förmig ausgebildet ist.

11. Fördervorrichtung (10) nach einem der vorstehenden Ansprüche,
wobei der wenigstens eine Grundkörper (20) einen ersten (21) und einen zweiten Grundkörper (22) umfasst, welche bezüglich einer Ebene, die senkrecht zur Querachse (12) ausgerichtet ist, spiegelsymmetrisch zueinander ausgebildet sind, so dass die betreffenden zweiten Rollenreihen (32) eine Förderebene definieren, die senkrecht zur Hochrichtung (13) ausgerichtet ist.

12. Fördervorrichtung (10) nach Anspruch 11,
wobei die Hilfskörper (50) des ersten (21) und des zweiten Grundkörpers (22) bezüglich der Querrichtung (12) jeweils an einer vom anderen, zweiten oder ersten, Grundkörper (22; 21) wegen weisenden Seite des betreffenden ersten (21) oder zweiten Grundkörpers (22) angeordnet sind, wobei sie jeweils nach Anspruch 8 oder 9 ausgebildet sind.

13. Fördervorrichtung (10) nach einem der Ansprüche 11 oder 12,
wobei der wenigstens eine Grundkörper (20) wenigstens einen dritten Grundkörper (23) umfasst, der in Querrichtung (12) zwischen dem ersten (21) und dem zweiten Grundkörper (22) angeordnet ist, wobei die betreffende zweite Rollenreihe (32) in Hochrichtung (13) über den betreffenden Hilfskörper (50) übersteht.
